# EUROPÄISCHE PATENTSCHRIFT

(11) **EP 2 674 315 B1**
(45) Veröffentlichungstag und Bekanntmachung des Hinweises auf die Patenterteilung: **17.10.2018**
(21) Anmeldenummer: 13168569.5
(22) Anmeldetag: 21.05.2013
(51) Int. Cl.: B60K 11/08, F01P 7/10, F16D 7/04

(54) **Lastbegrenzer**
Load limiter
Limiteur de charge

(30) Priorität: 13.06.2012 DE 102012011593
(43) Veröffentlichungstag der Anmeldung: 18.12.2013
(73) Patentinhaber: Magna Exteriors (Germany) GmbH, 66280 Sulzbach (DE)
(72) Erfinder: Knauer, Bernd, 73733 Esslingen (DE)
(74) Vertreter: Rausch, Gabriele

(56) Entgegenhaltungen:
- EP-A1- 2 371 602
- DE-A1- 3 701 584
- DE-A1-102009 014 003
- KR-A- 20120 050 106
- US-A- 2 561 136

## Beschreibung

Die Erfindung betrifft einen Lastbegrenzer für den steuerbaren Lufteinlass eines Kraftfahrzeuges nach der Art von Anspruch 1.

In modernen Kraftfahrzeugen wird zur Verbesserung des Warmlauftverhaltens des Motors der Luftstrom zum Wärmetauscher mittels verstellbaren Elementen gesteuert. Bei den verstellbaren Elementen, den Schließelementen handelt es sich zumeist um eine Anzahl schwenkbar gelagerter Lamellen, wobei deren Schwenkachsen parallel zueinander orientiert und diese insgesamt in einem Rahmen drehbar angeordnet sind. Der Rahmen samt der Lamellenanordnung ist dem Kühlergrill nachgeordnet und dem Wärmetauscher des Motors vorgeordnet. Eine derartige Anordnung kann auch in einem Strömungskanal angeordnet sein, über den Kühlluft von einer in der Karosserie angeordneten Öffnung zu dem Wärmetauscher, dem Kühler des Motors zugeführt wird. Durch Schließen der Frischluftzufuhr während des Warmlaufens bzw. durch Steuern der Kühlluftmenge entsprechend der Motortemperatur wird die optimale Betriebstemperatur schneller erreicht bzw. kann innerhalb eines engen Temperaturbereiches gehalten werden.

Beispiele für die beschriebenen Einrichtungen zeigen die EP 2 233 341 A1, die EP 2 233 342 A1, die EP 2 325 035 A1, die DE 10 2008 049 010 A1, die DE 20 2005 010 683 U1 sowie die DE 60 2004 007 338 T2.

Aus der DE 10 2009 014 003 A1 ist ein Aktuator bekannt, der den Lufteinlass bei Überschreiten einer vorgegebenen Temperatur in die Offenstellung schaltet. Eine einfache, zuverlässige Öffnung des Lufteinlasses ist mit dem beschriebenen System nicht gegeben. Letztlich beinhaltet diese bekannte Lösung auch keinen Schutz gegen antriebsseitige Fehlfunktionen.

EP 2 371 602 A1 zeigt einen Lastbegrenzer für den steuerbaren Lufteinlass eines Kraftfahrzeuges, bestehend aus einem mit einem Motor gekoppelten antriebsseitigen Mitnehmer, einem das Motormoment an die Schließelemente eines steuerbaren Lufteinlasses weiterleitenden abtriebsseitigen Mitnehmer.

US 2 561 136 A zeigt einen Lastbegrenzer, bei dem die in formschlüssigen Kontakt miteinander stehenden Mitnehmer zur Lösung des Formschlusses in Achsrichtung zueinander beweglich angeordnet sind und wobei ein oder mehrere Konturen des antriebsseitigen Mitnehmers in korrespondierend dazu ausgebildete Strukturen des abtriebsseitigen Mitnehmers eingreifen und durch ein zugeordnetes Federmittel der abtriebsseitige Mitnehmer im ausgekuppelten Zustand gegenüber dem antriebsseitigen Mitnehmer in eine Richtung verschwenkt wird.

Die Aufgabe der vorliegenden Erfindung besteht darin, einen steuerbaren Lufteinlass in gegenüber den bekannten Ausführungen verbesserter Ausführung zu schaffen, wobei der abtriebsseitige Mitnehmer im ausgekuppelten Zustand durch das Federmittel in Richtung Öffnen der Schließelemente verschwenkt wird.

Diese Aufgabe wird gelöst durch die Merkmale von Anspruch 1. Weiterbildungenergeben sich aus den Unteransprüchen.

Gemäß der Erfindung ist ein Lastbegrenzer für den steuerbaren Lufteinlass eines Kraftfahrzeuges vorgesehen, bestehend aus einem mit einem Motor gekoppelten antriebsseitigen Mitnehmer, einem das Motormoment an die Schließelemente eines steuerbaren Lufteinlasses weiterleitenden abtriebsseitigen Mitnehmer, wobei die in formschlüssigen Kontakt miteinander stehenden Mitnehmer zur Lösung des Formschlusses in Achsrichtung zueinander beweglich angeordnet sind, und durch ein zugeordnetes Federmittel der abtriebsseitige Mitnehmer im ausgekuppelten Zustand gegenüber dem antriebsseitigen Mitnehmer in eine Richtung verschwenkt wird.

Erfindungsgemäß ist vorgesehen, dass der abtriebsseitige Mitnehmer im ausgekuppelten Zustand durch das Federmittel in Richtung Öffnen der Schließelemente verschwenkt wird. Dadurch ist es möglich, durch manuelles Trennen der beiden Mitnehmer - die Teile werden in axialer Richtung auseinandergerückt - den Lufteinlass automatisch zu öffnen. Hierbei kann ein separates Mittel vorgesehen sein, welches im Bedarfsfall gegriffen und abgezogen wird, wodurch die beiden Mitnehmer ausgerückt werden. Durch das zwischen den Mitnehmerteilen angeordnete Federmittel wird der abtriebsseitige Mitnehmer in Richtung Öffnen verschwenkt - der Lufteinlass öffnet.

Die beiden Mitnehmerteile wirken formschlüssig miteinander zusammen, d.h. ein oder mehrere Konturen des antriebsseitigen Mitnehmers greifen in korrespondierend dazu ausgebildete Strukturen des abtriebsseitigen Mitnehmers ein. Diese Konturen sind so gestaltet, dass dadurch eine Übertragung der Drehbewegung bis zu einem vorgegebenen Drehmoment gewährleistet ist. Bei Überschreiten des Drehmomentes bewirkt die axial auf die Mitnehmer wirkende Kraft, dass diese gegeneinander verschoben werden, also ausrücken. Dadurch wirkt die Einrichtung drehmomentbegrenzend, d.h. bei einer Störung des Antriebsmomentes bzw. einem Blockieren der Schließelemente erfolgt ein automatisches Ausrücken.

Gemäß einer Ausführungsform der Erfindung ist das zwischen den Mitnehmern angeordnete Federelement als eine Drehschenkelfeder ausgebildet, welche sich mit je einem Schenkel an einem der Mitnehmer abstützt. Die Drehschenkelfeder ist hierbei derartig vorgespannt, dass bei axialem Ausrücken der Mitnehmer der abtriebsseitige Mitnehmer in Richtung Öffnen der Schließelemente verdreht wird.

Des Weiteren erfolgt die Erläuterung von Ausführungsbeispielen der Erfindung an Hand der Zeichnungen.

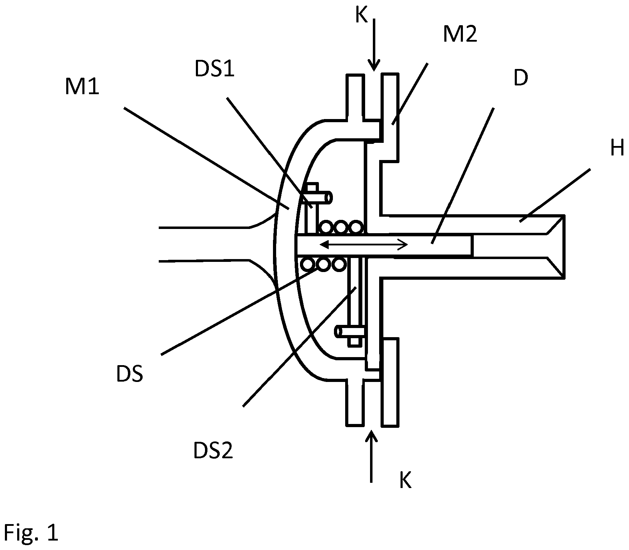

Figur 1 zeigt einen Schnitt durch den erfindungsgemäßen Lastbegrenzer. Ein mit einem nicht dargestellten Motor verbundener antriebsseitiger Mitnehmer M1 ist nach Art einer Glocke gestaltet und weist mittig einen Dorn D auf. Der Dorn D taucht in eine hülsenförmige Aufnahme H eines abtriebsseitigen Mitnehmers M2 ein, der seinerseits über nicht dargestellte Getriebeelemente mit ein oder mehreren Schließelementen eines steuerbaren Lufteinlasses verbunden ist.

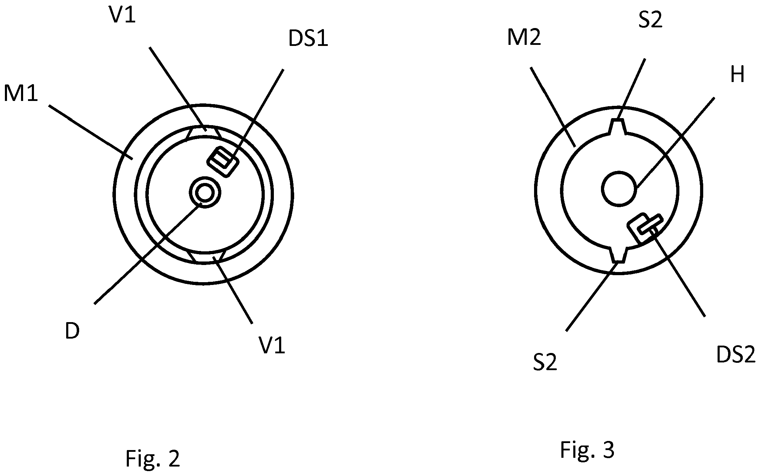

Die beiden Mitnehmerteile M1, M2 wirken in ihrem gemeinsamen Randbereich formschlüssig miteinander zusammen. Dazu weist der Rand des abtriebsseitigen Mitnehmers M2 zwei in radialer Richtung orientierte Stege S2 auf, welche in zwei nutartige Vertiefungen V1 im antriebsseitigen Mitnehmer M1 eingreifen (Figur 2 und 3). Der in die Aufnahme H des abtriebsseitigen Mitnehmers M2 eintauchende Dorn D des Mitnehmers M1 bewirkt eine axiale Führung und radiale Fixierung der beiden Teile M1, M2 zueinander, ermöglicht so gleichzeitig ein axiales Ausrücken der Mitnehmerteile M1, M2, und zwar im Falle einer von außen eingeprägten Kraft K, welche die Teile M1, M2 axial gegeneinander verschiebt bzw. im Falle eines zu großen Übertragungsmomentes, d.h. wenn über die formschlüssig miteinander zusammenwirkenden Konturen V1, S2 ein zu großes Moment übertragen werden soll. Das Grenzdrehmoment, bei welchem die durch die Mitnehmerteile M1, V1, M2, S2 gebildete Kupplung trennt ist durch geeignete Gestaltung der miteinander zusammenwirkenden Konturen V1, S2 gestaltbar, insbesondere durch die Neigungswinkel von miteinander zusammenwirkenden Flächen.

Eine Drehschenkelfeder DS ist auf den Dorn D des antriebsseitigen Mitnehmers M1 aufgesetzt. Diese Drehschenkelfeder DS stützt sich mit je einem ihrer Schenkel DS1, DS2 an den Mitnehmern M1, M2 ab und ist derartig vorgespannt, dass beim axialen Trennen der Mitnehmer M1, M2 der abtriebsseitige Mitnehmer M2 in Richtung Öffnen der angekoppelten Schließelemente verschwenkt wird. Die sich an den Mitnehmern M1, M2 abstützenden Schenkel DS1, DS2 sind in den Figuren 2 und 3 dargestellt, welche jeweils eine Draufsicht auf den an- und abtriebsseitigen Mitnehmer M1, M2 zeigen.

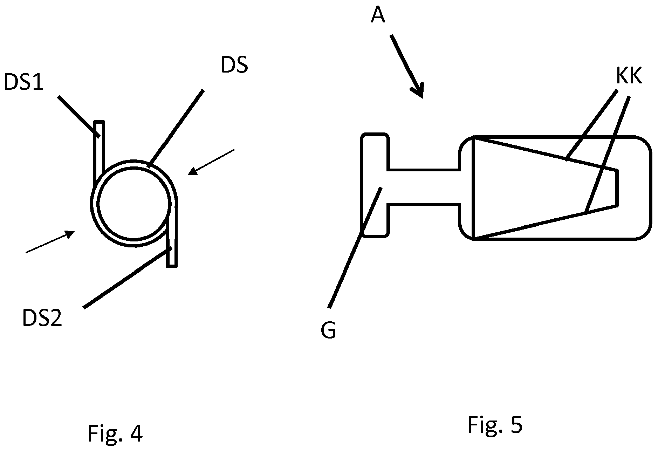

In Figur 4 ist die Drehschenkelfeder DS mit ihren Schenkeln DS1, DS2 als Einzelteil dargestellt.

Figur 5 zeigt einen Abzieher A mit einem Griff G. Dieser Abzieher A weist zwei in einem spitzen Winkel zueinander verlaufende Konturen KK auf. Der Abzieher A sitzt mit den Konturen KK zwischen den beiden Mitnehmerteilen M1, M2 und wird im Bedarfsfall - z.B. hohe Motortemperatur und die Schließelemente des steuerbaren Lufteinlasses öffnen nicht - in radialer Richtung abgezogen. Die beiden keilförmigen Konturen wirken nun wie die in Figur 1 dargestellten Kräfte K auf die Mitnehmer M1, M2 ein und trennen die durch diese Teile gebildete Kupplung.

### Bezugszeichenliste

- M1: Mitnehmer antriebsseitig
- M2: Mitnehmer abtriebsseitig
- V1: Vertiefung
- S2: Steg
- D: Dorn
- H: Hülsenförmige Aufnahme
- DS: Drehschenkelfeder
- DS1: Schenkel Drehschenkelfeder Abstützung Mitnehmer M1
- DS2: Schenkel Drehschenkelfeder Abstützung Mitnehmer M2
- K: Kraft
- A: Abzieher
- G: Griff
- KK: konische Kontur

## Patentansprüche

1. Lastbegrenzer für den steuerbaren Lufteinlass eines Kraftfahrzeuges, bestehend aus einem mit einem Motor gekoppelten antriebsseitigen Mitnehmer (M1), einem das Motormoment an die Schließelemente eines steuerbaren Lufteinlasses weiterleitenden abtriebsseitigen Mitnehmer (M2), dadurch gekemnnzeichnet, dass die in formschlüssigen Kontakt miteinander stehenden Mitnehmer (M1, M2) zur Lösung des Formschlusses in Achsrichtung zueinander beweglich angeordnet sind und dass ein oder mehrere Konturen des antriebsseitigen Mitnehmers (M1) in korrespondierend dazu ausgebildete Strukturen des abtriebsseitigen Mitnehmers (M2) eingreifen und durch ein zugeordnetes Federmittel (DS) der abtriebsseitige Mitnehmer (M2) im ausgekuppelten Zustand gegenüber dem antriebsseitigen Mitnehmer (M1) in eine Richtung verschwenkt wird, wobei zwischen die Mitnehmerteile (M1, M2) ein Abzieher (A) mit einem Griff (G) montierbar ist, durch den bei radialem Abziehen die beiden Mitnehmer (M1, M2) axial trennbar sind

2. Lastbegrenzer nach Anspruch 1, **dadurch gekennzeichnet, dass** das Federmittel als eine Drehschenkelfeder (DS) ausgebildet ist.

3. Lastbegrenzer nach Anspruch 1 oder 2, **dadurch gekennzeichnet, dass** einer der Mitnehmer (M1) einen Dorn (D) aufweist, der eine axiale Führung bildend in eine hülsenförmige Aufnahme (H) des zweiten Mitnehmers (M2) eintaucht.

4. Lastbegrenzer nach Anspruch 2 und 3, **dadurch gekennzeichnet, dass** die Drehschenkelfeder (DS auf dem Dorn (D) des einen Mitnehmers (M1)) sitzt.

5. Lastbegrenzer nach einem der vorhergehenden Ansprüche, **dadurch gekennzeichnet, dass** einer der Mitnehmer (M2) in radialer Richtung verlaufende Stege (S2) aufweist, die mit entsprechenden Vertiefungen (V1) am anderen Mitnehmer (M1) zusammenwirken.

## Claims

1. Load limiter for the controllable air inlet of a motor vehicle, comprising a drive-side driver (M1) coupled to an engine, and an output-side driver (M2) relaying the engine torque to the closing elements of a controllable air inlet, **characterized in that** the drivers (M1, M2) in positively interlocking contact with one another are moveably arranged in an axial direction to one another in order to release the positive interlock, and **in that** one or more contours of the drive-side driver (M1) engage in correspondingly formed structures of the output-side driver (M2), and the output-side driver (M2) in the disengaged state is pivoted by an associated spring means (DS) in one direction relative to the drive-side driver (M1), in which a puller (A) having a grip (G), which when pulled radially serves for axially separating the two drivers (M1, M2), can be fitted between the driver parts (M1, M2).

2. Load limiter according to Claim 1, **characterized in that** the spring means is embodied as a torsion spring (DS).

3. Load limiter according to Claim 1 or 2, **characterized in that** one of the drivers (M1) comprises a pin (D), which sinks into a sleeve-shaped socket (H) of the second driver (M2), forming an axial guide.

4. Load limiter according to Claims 2 and 3, **characterized in that** the torsion spring (DS) is seated on the pin (D) of the one driver (M1).

5. Load limiter according to one of the preceding claims, **characterized in that** one of the drivers (M2) comprises studs (S2) running in a radial direction, which interact with corresponding recesses (V1) on the other driver (M1).

## Revendications

1. Limiteur de charge pour l'entrée d'air commandable d'un véhicule automobile, constitué d'un dispositif d'entraînement (M1) du côté de l'entraînement, accouplé à un moteur, d'un dispositif d'entraînement (M2) du côté de la sortie, transférant le couple du moteur aux éléments de fermeture d'une entrée d'air commandable, **caractérisé en ce que** les dispositifs d'entraînement (M1, M2) en contact mutuel par engagement par correspondance de formes sont disposés de manière déplaçable l'un par rapport à l'autre dans la direction axiale pour libérer l'engagement par correspondance de formes et **en ce qu'**un ou plusieurs contours du dispositif d'entraînement (M1) du côté de l'entraînement s'engagent dans des structures réalisées de manière correspondante du dispositif d'entraînement (M2) du côté de la sortie et le dispositif d'entraînement (M2) du côté de la sortie est pivoté par un moyen de ressort associé (DS) dans l'état désaccouplé dans une direction par rapport au dispositif d'entraînement (M1) du côté de l'entraînement, un extracteur (A) avec une poignée (G) pouvant être monté entre les parties des dispositifs d'entraînement (M1, M2), par le biais duquel extracteur les deux dispositifs d'entraînement (M1, M2) peuvent être séparés axialement lors d'une traction radiale.

2. Limiteur de charge selon la revendication 1, **caractérisé en ce que** le moyen de ressort est réalisé sous la forme d'un ressort à branches rotatif (DS).

3. Limiteur de charge selon la revendication 1 ou 2, **caractérisé en ce que** l'un des dispositifs d'entraînement (M1) présente un mandrin (D) qui s'enfonce dans un logement en forme de douille (H) du deuxième dispositif d'entraînement (M2) en formant un guide axial.

4. Limiteur de charge selon la revendication 2 et 3, **caractérisé en ce que** le ressort à branches rotatif (DS) repose sur le mandrin (D) de l'un des dispositifs d'entraînement (M1).

5. Limiteur de charge selon l'une quelconque des revendications précédentes, **caractérisé en ce que** l'un des dispositifs d'entraînement (M2) présente des nervures (S2) s'étendant dans la direction radiale, lesquelles coopèrent avec des renfoncements correspondant (V1) au niveau de l'autre dispositif d'entraînement (M1).
